# EUROPÄISCHE PATENTSCHRIFT

(11) **EP 1 903 281 B1**
(45) Veröffentlichungstag und Bekanntmachung des Hinweises auf die Patenterteilung: **23.10.2013**
(21) Anmeldenummer: 07002891.5
(22) Anmeldetag: 12.02.2007
(51) Int. Cl.: F22B 37/20, F16L 3/16

(54) **Befestigungseinrichtung für sich verschiebende Rohrleitungen**
Fastening unit for moving pipes
Dispositif de fixation pour de tuyaux se déplaçant

(30) Priorität: 15.02.2006 DE 102006007239
(43) Veröffentlichungstag der Anmeldung: 26.03.2008
(73) Patentinhaber: RWE Power Aktiengesellschaft, 45128 Essen (DE)
(72) Erfinder: Duttke, Christian, 67134 Birkenheide (DE); Kappen, Martin, 45239 Essen (DE); Fischbeck, Tino, 45468 Mülheim (DE); Kuschy, Torsten, 67251 Freinsheim (DE)
(74) Vertreter: polypatent

(56) Entgegenhaltungen:
- DE-A1- 3 001 028
- JP-A- 2001 056 071

## Beschreibung

Die Erfindung betrifft eine Befestigungseinrichtung für sich verschiebende Rohrleitungen, insbesondere für sich verschiebende Rohrleitungsbögen. Hierunter sind insbesondere warmgehende Rohrleitungen und Rohrleitungsbögen im Kraftwerksbau zu verstehen, die sich aufgrund ihrer thermischen Beanspruchung dehnen und/oder verschieben.

In modernen konventionellen Kraftwerken, in welchen durch freiwerdende Wärme Dampf erzeugt wird, dessen Energiegehalt über Dampfturbinen in Strom umgesetzt wird, ist eine Maßnahme zur effizienten Energieerzeugung die Erhöhung der Betriebstemperaturen der Dampfsysteme. Hiermit einher gehen große thermische Beanspruchungen der Rohrleitungssysteme, die entsprechend gesichert werden müssen.

Üblicherweise werden warmgehende Rohrleitungen im Kraftwerksbau mit sog. Konstanthängern aufgehängt. Bei den Konstanthängern handelt es sich um bewegungsausgleichende Halterungen, bei denen mechanisch wirkende Bauteile die Rohrleitungslasten übernehmen und die der wärmedehnungsbedingten Bewegung der Rohrleitungen fast widerstandfrei folgen. Hierbei steht das Rohrleitungsgewicht mit der Einstelllast der Konstanthänger annähernd im Gleichgewicht.

Große Beträge an Längenänderungen werden durch Rohrleitungsschleifen aufgefangen, womit letztendlich sichergestellt wird, dass an den angeschlossenen Aggregaten die Anschlusslasten nicht überschritten werden.

Die Einrichtung bzw. die Installation von Rohrleitungssystemen erfolgt üblicherweise bei Umgebungstemperatur. Bei dieser Temperatur werden die Konstanthänger in horizontal verlaufenden Rohrleitungsabschnitten so installiert, dass sie senkrecht zur Rohrachse ausgerichtet sind. Werden die Leitungen später warm bzw. heiß beaufschlagt, führt deren Erwärmung zu einer entsprechenden Ausdehnung, welcher bisher konstruktiv, beispielsweise durch Rohrleitungsschleifen, begegnet wurde. Auch war es üblich, die Rohrleitung im Bereich von Rohrleitungsbögen mit entsprechender geometrischer Vorspannung zu fertigen, die so ausgelegt war, dass die dann warm beaufschlagte Rohrleitung weitestgehend spannungsfrei war.

Die Längenänderungen der Rohrleitungen bewirken auch, dass in den Aufhängungen ein Schrägzug entsteht, der eine zusätzliche horizontale Kraft in das Rohrleitungssystem einbringt, die ebenfalls entsprechend ausgeglichen werden muss.

Grundsätzlich ist es wünschenswert, in der Kraftwerksverrohrung möglichst wenige Rohrleitungsschleifen vorzusehen, weil damit ein erhöhter Materialaufwand und auch Druckverluste im Rohrleitungssystem einhergehen.

Schließlich ist es auch wünschenswert, die Raumbeanspruchung durch Rohrleitungssysteme so gering wie möglich zu halten.

Aus der DE 30 01 028 ist eine Rohrleitungsstützung mit Stäben bekannt, die über Gelenke zwischen Festpunkten und dem Rohr befestigt sind. Das Rohr ist von einem Rahmen umgeben, an dem die Stäbe angelenkt sind. Dabei ist das Rohr in dem Rahmen in mindestens einer Bewegungs- oder Drehrichtung freibeweglich gelagert. Dadurch wird die Unterstützungskraft exakt in den geforderten Richtungen von dem Rahmen aufgenommen und in Achsrichtung der so an dem Rahmen ausgerichteten Stäbe in ein entsprechendes Gegenlager abgeleitet.

Aus der JP 2001056071 A ist eine erdbebensichere hydraulische Abstützung einer Rohrleitungsanordnung bekannt. Die Rohrleitung ist an zwei im rechten Winkel zueinander angeordneten Stützen abgestützt, die jeweils als hydraulische Stützen ausgebildet sind, wobei eine Strebe der Stütze jeweils als Kolben ausgebildet ist, der in einem als Zylinder wirkenden Teil der Stütze verschiebbar ist, wenn bestimmte Kräfte überschritten werden. Die Zylinder sind jeweils mit einem Fluid gefüllt und über eine ausbrechbare Stauscheibe verschlossen. Beim Überschreiten eines vorgegebenen hydraulischen Drucks wird die Nachgiebigkeit der Stützen durch das Brechen der Stauscheiben hergestellt.

Der Erfindung liegt daher die Aufgabe zugrunde, eine Befestigungseinrichtung für sich verschiebende warmgehende Rohrleitungen, insbesondere für Rohrbögen, bereitzustellen, mit der es möglich ist, den erforderlichen Aufwand für den Ausgleich von Wärmespannungen und -kräften sowie Biege- und Torsionsmomenten möglichst gering zu halten.

Die Aufgabe wird gelöst durch eine Befestigungseinrichtung für sich verschiebende Rohrleitungen, insbesondere Rohrbögen, umfassend wenigstens eine Aufhängevorrichtung mit an dieser angeordnetem Zugelement und mit einer Rohraufnahme zur Aufnahme der Gewichtskraft der Rohrleitung und weiterhin umfassend wenigstens eine quer zur Gewichtskraftrichtung wirkende Stütze oder Abspannung mit einer Rohraufnahme, einem Zug- oder Druckelement und einer Lastaufnahme als Widerlager, wobei die Stütze oder Abspannung eine Druck- oder Zugkraft ausübt, die einer aus einer Verschiebung der Rohrleitung resultierenden Rückstellkraft quer zu ihrer Gewichtskraft entgegenwirkt.

Dabei folgt die Stütze oder Abspannung einer Verschiebung der Rohrleitung quer zu ihrer Gewichtskraft und kompensiert dabei vollständig die horizontal wirkenden Rückstellkräfte der Aufhängevorrichtung. Die Stütze oder Abspannung kann in Richtung oder gegen eine erwartete Verschiebung des Rohrbogens oder der Rohrleitung vorgespannt sein.

Auf diese Art und Weise kann insbesondere der horizontalen Kraftkomponente eines Schrägzuges der Aufhängervorrichtung zur Aufnahme der Gewichtskraft der Rohrleitung entgegengewirkt werden. Hierdurch wird die Rohrleitung von zusätzlichen Kräften frei gehalten, es ist nicht erforderlich, diese mit einer geometrischen Vorspannung zu konstruieren. Die Anzahl der benötigten Ausgleichsschleifen in der Rohrleitungsführung kann so gering wie irgend möglich gehalten werden.

Bei einer weiteren bevorzugten Ausführungsform der Befestigungsvorrichtung nach der Erfindung ist vorgesehen, dass die Lastaufnahme so ausgebildet ist, dass diese ungeachtet etwaiger Verschiebebewegungen der Rohrleitungen eine konstante Zug- oder Drucklast auf die Stütze oder Abspannung ausübt.

Die Erfindung macht sich hierbei die Wirkung des an und für sich bekannten Konstanthängerprinzips zunutze, wobei die horizontale Abstützung der Rohrleitung oder des Rohrleitungsbogens am Baukörper mit einer vorgegebenen Vorspannung zusätzlich zu der Aufhängung vorgesehen ist und mit dieser zusammenwirkt, so dass auf diese Art und Weise die Anschlusselemente, wie beispielsweise eine Turbine oder ein anderes Aggregat, von zusätzlichen Anschlusskräften weitestgehend frei gehalten werden.

Alternativ hierzu kann die Lastaufnahme auch so ausgebildet sein, dass diese auf die Stütze oder Abspannung eine Zug- oder Druckkraft ausübt, die sich über den Verschiebeweg der Rohrleitung ändert (Federprinzip).

Zweckmäßigerweise übt die Aufhängevorrichtung eine konstante Zugkraft auf die Rohrleitung aus, wobei die Zugkraft etwa der Gewichtskraft der Rohrleitung entspricht.

Besonders günstig ist die Anordnung gemäß der Erfindung bei Rohrleitungsbögen, bei denen Rohrleitungen aus der Vertikalen in die Horizontale umgelenkt werden. Solche Rohrleitungsführungen sind häufig an Frischdampfleitungen von Dampferzeugern zu finden. Selbstverständlich ist die Befestigungsanordnung gemäß der Erfindung nicht ausschließlich auf einen solchen Rohrleitungsverlauf beschränkt, vielmehr kann dieser auch zur Festlegung von in der Horizontalen verlaufenden Rohrleitungsbögen bzw. Rohrleitungsbiegungen vorgesehen sein.

Bei einer solchen Anordnung kann der vertikale Schenkel des Rohrbogens an der Baukonstruktion gestützt oder abgespannt sein, wohingegen der horizontal verlegte Schenkel des Rohrbogens mit einem oder mehreren Konstanthängern an der Decke der Baukonstruktion abgehängt ist.

Die Erfindung wird nachstehend anhand eines in den Zeichnungen dargestellten Ausführungsbeispiels erläutert.

Es zeigen:
- Figur 1: eine schematische Darstellung der Befestigungseinrichtung gemäß der Erfindung,
- Figur 2: eine perspektivische Darstellung einer Befestigungseinrichtung nach der Erfindung, und
- Figur 3: eine schematische überzeichnete Darstellung eines Rohrleitungssystems an einem Dampferzeuger, kalt- und warmgehend.

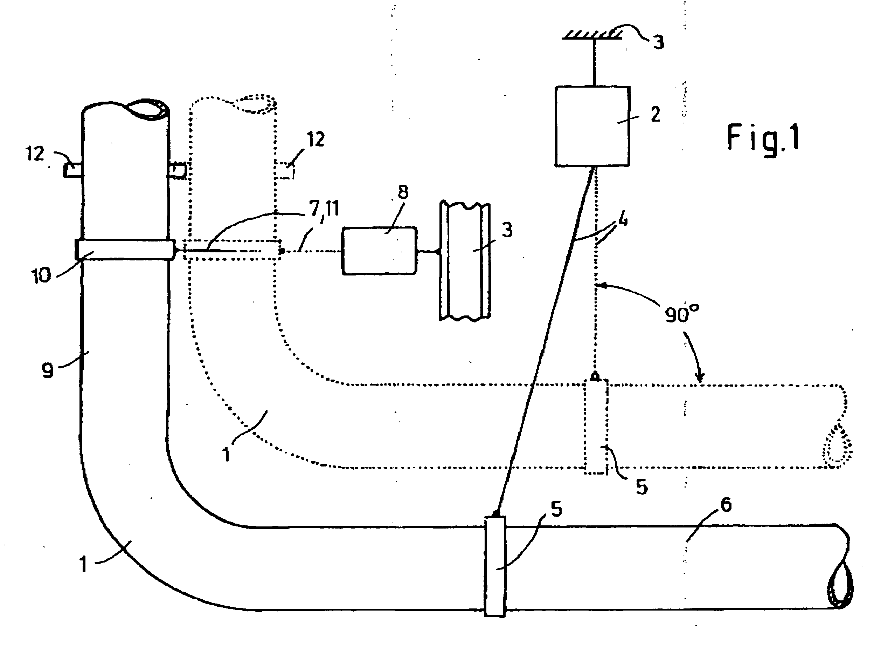

In Figur 1 ist ein Rohrbogen 1 in kaltem und in warmem Zustand dargestellt, wobei die strichpunktierte Darstellung des Rohrbogens 1 dessen kalten Zustand veranschaulicht, wohingegen die durchgezogene Darstellung des Rohrbogens dessen Lage im Warmzustand darstellt. Der Rohrbogen 1 ist bei dem beschriebenen Ausführungsbeispiel eine Frischdampfleitung, die von einem Dampferzeuger zu einer Turbine geführt ist. Der Rohrbogen 1 ist mit einer als Konstanthänger ausgebildeten Aufhängevorrichtung 2 an der nur andeutungsweise dargestellten Baukonstruktion 3 abgehängt.

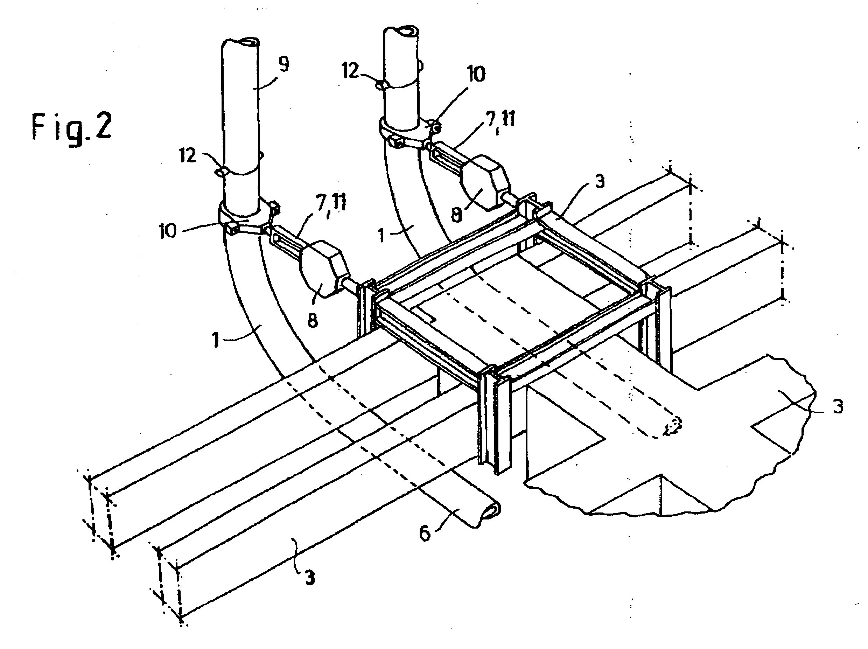

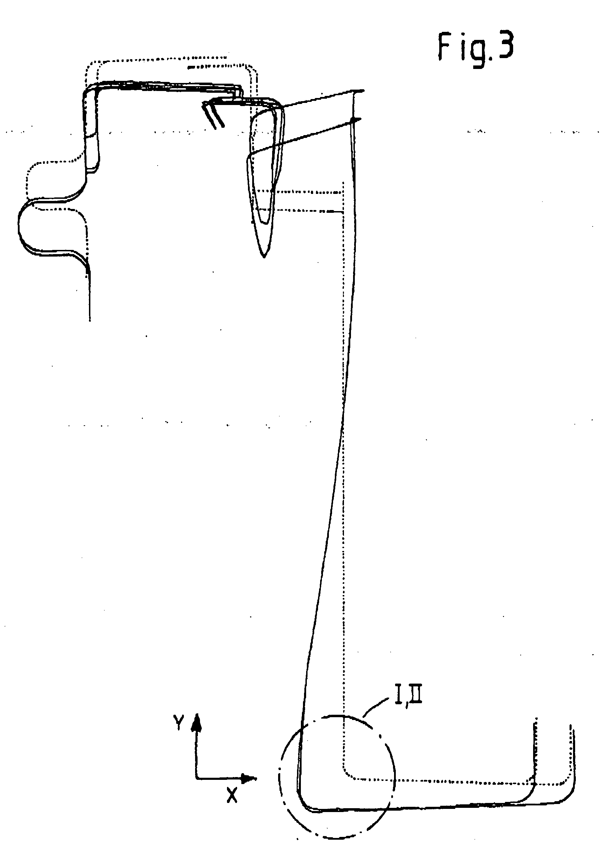

In Figur 3 ist schematisch ein Rohrleitungsverlauf von einem Dampferzeuger zu einer Turbine dargestellt, wobei zwei Rohrleitungszüge in jeweils zwei Zuständen dargestellt sind. Die punktierten Linien zeigen den kalten Verlauf der Rohrleitungen, wohingegen die durchgezogenen Linien deren warmgehenden Verlauf darstellen, beispielsweise bei einer Temperatur des Mediums von etwa 600°C. Die Figur verdeutlicht die Lageveränderungen der Rohrleitungen, die durch die temperaturbedingten Längenänderungen hervorgerufen sind. Die Darstellung ist übertrieben und nicht maßstäblich. Aus der Abbildung ist ersichtlich, dass die Längenänderungen der Rohrleitungen auch zu Momenten führen, die die Bewegungen des Rohrleitungssystems beeinflussen. Die Figuren 1 und 2 zeigen den in Figur 3 eingekreisten Ausschnitt des Rohrleitungssystems. Daraus ist ersichtlich, dass sich die Rohrleitungen vom kalten in den warmen Zustand sowohl in X-Richtung als auch in Y-Richtung des eingezeichneten Koordinatensystems bewegen.

Die als Konstanthänger ausgebildete Aufhängevorrichtung 2 umfasst ein Zugelement 4 und eine Rohrschelle 5, die den Rohrbogen 1 umschließt. Im idealen, kalten und unbelasteten Zustand des Rohrbogens 1, der in Figur 1 mit gepunkteten Linien dargestellt ist, bildet das Zugelement mit der Längsachse des horizontalen Schenkels 6 des Rohrbogens 1 einen rechten Winkel

Bei thermischer Beanspruchung des Rohrbogens 1 tendiert dieser in die Lage, die in durchgezogenen Linien dargestellt ist. Dabei wird das Zugelement 4 an der Aufhängevorrichtung 2 aus der Lotrechten ausgelenkt. Die nun entstehende Kraft lässt sich in eine in X-Richtung wirkende Komponente und in eine in Y-Richtung wirkende Komponente zerlegen. Durch diesen Schrägzug auf das Zugelement 4 wird die in X-Richtung wirkende Kraftkomponente zusätzlich zu der thermischen Längenänderung auf den horizontalen Schenkel des Rohrbogens 6 in Richtung der X-Achse bzw. in Richtung dessen Längsachse auf diesen einwirken.

An dieser Stelle sei bemerkt, dass der horizontale Schenkel 6 des Rohrbogens 1 bzw. der weitere Verlauf der Rohrleitung in der Horizontalen über mehrere Konstanthänger abgehängt ist. Nur zu Vereinfachungszwecken ist hier jeweils immer von einer Aufhängevorrichtung die Rede. Es ist für den Fachmann einleuchtend, dass über mehrere Konstanthänger und den daraus resultierenden Schrägzug ein entsprechend hoher Betrag an zusätzlichen Kräften in X-Richtung in die Rohrleitung eingebracht wird.

Die Befestigungseinrichtung gemäß der Erfindung umfasst zusätzlich zu der Aufhängevorrichtung 2 eine Stütze 7 oder eine Abspannung mit einer an der Baukonstruktion 3 angeschlagenen Lastaufnahme_ Der vertikale Schenkel 9 des Rohrbogens wird über eine weitere Rohrschelle 10 mit einer Stützstange 11 gegen die Lastaufnahme 8 abgestützt. Diese Anordnung wirkt quer zur Gewichtskraftsrichtung des Rohrbogens 1. Die Frage, ob hier ein Zugelement oder ein Druckelement in Form einer Stütze vorgesehen ist, ist lediglich eine Frage dessen, an welcher Stelle der Baukonstruktion 3 in Bezug auf die Richtung der Längenänderung der Rohrleitung die in X-Richtung wirkenden Kräfte abzufangen sind. Die Lastaufnahme 8 in einer Variante der Erfindung ist so konstruiert, wie die Aufhängevorrichtung. Diese ist in Richtung der erwarteten Verschiebung des Rohrbogens 1, wie aus dem dargestellten Ausführungsbeispiel ersichtlich, nach links vorgespannt, wobei die Lastaufnahme 8 ungeachtet etwaiger Verschiebebewegungen der Rohrleitung eine konstante Druckkraft auf den Rohrbogen ausübt, so, dass idealerweise die horizontale Kraft des Schrägzuges der Aufhängevorrichtung 2 vollständig kompensiert wird.

Alternativ kann die Lastaufnahme 8 so ausgebildet sein, dass über die Stützstange 11 eine horizontale Reaktionskraft auf den Rohrbogen 1 ausgeübt wird, die etwa der sich mit der Verschiebung der Rohrleitung ändernden Horizontalkraft entspricht.

Mit dem Bezugszeichen 12 ist in den Figuren 1 und 2 nur andeutungsweise eine zusätzliche Einspannung des horizontalen Schenkels 6 des Rohrbogens 1 und somit eine zusätzliche Festlegung desselben in Y-Richtung bezeichnet. Aufgrund dieser zusätzlichen Einspannung wirkt sich eine Längenänderung der Rohrleitung fast nicht auf die Horizontallage der Stützstange 11 aus.

### Bezugszeichenliste:

- 1: Rohrbogen
- 2: Aufhängevorrichtung
- 3: Baukonstruktion
- 4: Zugelement
- 5: Rohrschelle
- 6: horizontaler Schenkel des Rohrbogens
- 7: Abspannung
- 8: Lastaufnahme
- 9: vertikaler Schenkel des Rohrbogens
- 10: Rohrschelle
- 11: Stützstange
- 12: Einspannung

## Patentansprüche

1. Befestigungseinrichtung für sich verschiebende Rohrleitungen aufgrund thermischer Beanspruchung, insbesondere für Rohrbögen, umfassend wenigstens eine Aufhängevorrichtung (2) mit an dieser angeordnetem Zugelement (4) und mit einer Rohraufnahme zur Aufnahme der Gewichtskraft der Rohrleitung und weiterhin umfassend wenigstens eine quer zur Gewichtskraft wirkende Stütze oder Abspannung (7) mit einer Rohraufnahme, einem Zug- oder Druckelement (11) und einer Lastaufnahme (8) als Widerlager, wobei die Stütze oder Abspannung (7) eine Druck- oder Zugkraft ausübt, die einer aus einer Verschiebung der Rohrleitung resultierenden Rückstellkraft, quer zu ihrer Gewichtskraft, entgegenwirkt, **dadurch gekennzeichnet, dass** die Stütze (7) oder Abspannung so ausgebildet ist, dass sie einer erwarteten Verschiebung der Rohrleitung folgt und dabei die horizontale Rückstellkraft der Aufhängevorrichtung (2) vollständig kompensiert.

2. Befestigungseinrichtung nach Anspruch 1, **dadurch gekennzeichnet, dass** die Lastaufnahme (8) so ausgebildet ist, dass diese ungeachtet etwaiger Verschiebebewegungen der Rohrleitungen eine konstante Zug- oder Druckkraft auf die Stütze (7) oder Abspannung ausübt (Konstanthängerprinzip).

3. Befestigungseinrichtung nach Ansprüch 1, **dadurch gekennzeichnet, dass** die Lastaufnahme (8) so ausgebildet ist, dass diese auf die Stütze (7) oder Abspannung eine Zug- oder Druckkraft ausübt, die sich über den Verschiebeweg der Rohrleitung ändert (Federprinzip)

4. Befestigungseinrichtung nach einem der Ansprüche 1 bis3, **dadurch gekennzeichnet, dass** die Aufhängevorrichtung (2) eine konstante Zugkraft auf die Rohrleitung ausübt, die der Gewichtskraft der Rohrleitung etwa entspricht.

## Claims

1. Fastening device for pipes that move due to thermal stressing, in particular for pipe elbows, comprising at least one suspension device (2) with a tensile element (4) arranged on this and with a pipe mounting for taking up the weight force of the pipe and further comprising at least one support or brace (7) acting transversely to the weight force with a pipe mounting, a tensile or pressure element (11) and a load take-up (8) as an abutment, wherein the support or brace (7) exerts a compressive or tensile force, which counteracts a resetting force resulting from a displacement of the pipe, transversely to its weight force, **characterised in that** the support (7) or brace is formed so that it follows an expected displacement of the pipe and in doing so fully compensates for the horizontal resetting force of the suspension device (2).

2. Fastening device according to claim 1, **characterised in that** the load take-up (8) is formed so that this exerts a constant tensile or compressive force on the support (7) or brace regardless of any displacement movements of the pipes (constant hanger principle).

3. Fastening device according to claim 1, **characterised in that** the load take-up (8) is formed so that this exerts a tensile or compressive force that varies over the displacement path of the pipe on the support (7) or brace (spring principle).

4. Fastening device according to one of claims 1 to 3, **characterised in that** the suspension device (2) exerts a constant tensile force on the pipe that corresponds roughly to the weight force of the pipe.

## Revendications

1. Dispositif de fixation pour conduites tubulaires se déplaçant sous l'effet d'une sollicitation thermique, en particulier pour des coudes de tube, comportant au moins un dispositif de suspension (2) avec un élément de traction(4), agencé sur ce dernier, et avec un système de suspension de tube destiné à supporter le poids de la conduite tubulaire et comportant, en outre, au moins un support ou ancrage (7) avec un système de suspension de tube, un élément de traction ou de pression (11) et un système de suspension de charge (8) en tant que contrebutée, le support ou ancrage (7) exerçant une force de pression ou de traction qui s'oppose à une force de rappel, résultant d'un déplacement de la conduite tubulaire et exercée transversalement au poids de celle-ci, **caractérisé en ce que** le support (7) ou ancrage est réalisé de telle sorte qu'il suit un déplacement attendu de la conduite tubulaire et, en l'occurrence, compense complètement la force de rappel horizontale du dispositif de suspension (2).

2. Dispositif de fixation selon la revendication 1, **caractérisé en ce que** le système de suspension de charge (8) est configuré de telle sorte qu'il exerce, indépendamment d'éventuels mouvements de translation des conduites tubulaires, une force de traction ou de pression constante sur le support (7) ou ancrage (principe de suspension constante).

3. Dispositif de fixation selon la revendication 1, **caractérisé en ce que** le système de suspension de charge (8) est configuré de telle sorte qu'il exerce une force de traction ou de pression sur le support (7) ou ancrage, laquelle varie le long du trajet du déplacement de la conduite tubulaire (principe du ressort).

4. Dispositif de fixation selon l'une quelconque des revendications 1 à 3, **caractérisé en ce que** le dispositif de suspension (2) exerce une force de traction constante sur la conduite tubulaire, laquelle correspond sensiblement au poids de la conduite tubulaire.
